# EUROPEAN PATENT SPECIFICATION

(11) **EP 1 858 729 B1**
(45) Date of publication and mention of the grant of the patent: **27.05.2009**
(21) Application number: 05722203.6
(22) Date of filing: 10.03.2005
(51) Int. Cl.: B60R 11/00

(54) **COMMERCIAL VEHICLE CAB ACCESSORY MOUNTING SYSTEM**
SYSTEM ZUR MONTAGE VON NUTZFAHRZEUGKABINENZUBEHÖR
SYSTEME DE MONTAGE D'ACCESSOIRES SUR UNE CABINE DE VEHICULE COMMERCIAL

(43) Date of publication of application: 28.11.2007
(73) Proprietor: VOLVO LASTVAGNAR AB, 405 08 Göteborg (SE)
(72) Inventor: BANG, Edvard, S-426 54 Västra Frölunda (SE); LJUNGQVIST, Hanna, SE-413 16 Göteborg (SE)
(74) Representative: Fröhling, Werner Otto
(86) International application number: PCT/SE2005/000356
(87) International publication number: WO 2006/096103

(56) References cited:
- DE-A1- 10 052 643
- GB-A- 2 034 642
- US-A1- 2003 080 167
- US-B1- 6 722 541

## Description

### Field of the invention

The invention relates to a driver's cab of a commercial vehicle, comprising at least one rail being mounted to the exterior of said cab. The invention also relates to a commercial vehicle cab accessory mounting system and to the use of such a system.

### Background of the invention

The present invention refers to the field of commercial vehicles, such as trucks, lorries or busses. Commercial vehicles are generally adapted so as to transport goods on a platform, trailer or the like being arranged separate from a driver's cab. Thus the exterior of a driver's cab of a commercial vehicle is not designed to carry any substantial goods or load.

In contrast, it is common to mount various accessories such as lamps, horns, wind deflectors, mirrors, signs etc. to the exterior of a cab of a commercial vehicle. The accessories provide a possibility for the owner of the vehicle to tailor the exterior of the cab to his/her own needs or preferences.

The means previously proposed for fastening accessories to the cab are numerous and exhibit great variety. This is partly due to the fact that the accessories to be fastened are of varying appearance and function. It is also due to the fact that it is often desired to fasten accessories to different areas of the exterior of the cab, such as e.g. the roof, the lower or centre area of the front, the side walls or the rear.

Sometimes, accessories are fastened directly to the exterior wall of the cab, by means of e.g. bolts or welding. An alternative approach, in particular for mounting accessories to the roof of a cab, is to fasten an intermediary support bar to the exterior roof and to bolt or wedge the accessory onto the bar.

US-A-2003/0080167 discloses a driver's cab of a vehicle provided with rails enabling attachment of accessories according to the preambles of claims 1 and 18.

### Summary of the invention

An object of the invention is to provide a solution for fastening of accessories to the exterior of a driver's cab of a commercial vehicle, allowing for flexible attachment of accessories to the cab. Preferably, the system should allow for fastening of a diverse range of accessories, such as wind deflectors, mirrors, lamps, horns etc. Advantageously, the system should be suitable for any exterior area of a cab.

The above-mentioned object is achieved by a driver's cab according to claim 1 or by a commercial vehicle cab accessory mounting system according to claim 18.

It is to be understood, that with the term "commercial vehicle" is meant vehicles such as e.g. lorries, trucks, busses and delivery vans.

With the term "designated accessories" is meant accessories being suitable for fastening to the rails, either directly or via an intermediate fastening means. With accessories is meant functional accessories such as lamps, mirrors, horns, air deflectors etc. , which are functional, in contrast to goods or load for transport.

The proposed cab presents a rail forming integral attachment means extending along the rail. The attachment means is thus a part of the rail itself. Accessories may be mounted at optional positions along the attachment means, which provides the desired flexibility as regards the positioning of the accessories. The attachment means enables releasable attachment of the accessories, meaning that accessories can be placed and replaced along the attachment means without necessitating alterations or causing damage to the attachment means or the accessories.

The proposed rail has the advantage of being arrangable at any area of the exterior of the cab, such as the roof, the front, the sides, the rear, the bottom etc.

Advantageously, the attachment means enable releasable attachment of designated accessories by mechanical interlocking. Such a mechanical interlocking can be achieved e.g. by the attachment means forming a male/female connection with the designated accessory.

In one embodiment, the attachment means may comprise a number of attachment formations being arranged sequentially along the rail. Each attachment formation provides a position for attachment of an accessory to the rail. The attachment formations could come in many forms and shapes, such as e.g. a number of indentations or the like distributed along the rail. The attachment formation may advantageously be distributed along the full length of the rail, so as to provide a sufficient number of attachment positions.

In a more preferred embodiment, however, the attachment means may be formed as a profile extending along the rail. Such a profile provides possible attachment positions anywhere along its extension, thus providing maximum flexibility in the choice of location for an accessory. Furthermore, an accessory or an intermediate fastening device may be slid along the profile so as to reach a desired position.

The invention enables convenient releasable connection of accessories to the rail. As an example, accessories may be attached to the attachment means using a bolt and a counteracting element, such as a nut plate. The counteracting element may be inserted in the inner portion of the groove from a short end of the groove or alternatively from an insertion opening being provided along the groove, and slid in the inner portion so as to reach a desired position for fastening an accessory. Once the counteracting element is in place, a bolt being associated with the accessory may be brought through the narrow outer portion of the groove to engage to the counter element so as to fasten the accessory.

The guide portion could act as sole attachment means for a compressible element being introduced into the guide portion and retained by friction. Such an attachment would however only be suitable for attachment of relatively small or light articles, being exposed only to moderate forces when in use.

When an article is attached using the inner and outer portion of the groove as described above, the guide portion may act to guide the accessory towards an attachment position, and to stabilize the accessory once attached.

A groove having the above-mentioned outer and inner portions, and a wider outermost portion may thus provide for two different attachment possibilities: by bolts or the like using a counter-element in the inner portion of the groove or by friction, using the outermost portion of the groove for receiving a compressible element.

The friction function of a guide groove may naturally also be obtained if the guide groove is arranged separately, without any outer and inner portions for counter-acting elements.

Further, accessories may be attached by clamping about the rail, in which case the groove may be used to provide additional support for a clamping bracket or the like.

The inner and outer portions may advantageously be provided by a groove having a T-shaped cross-section. The wider guide portion may be provided by a groove having a C-shaped cross-section.

In one preferred embodiment, the rail is mounted flush with the exterior of the cab. This arrangement is advantageous since it enables use of a rail essentially without contribution to the wind resistance of the cab.

Preferably, the driver's cab may comprise a plurality of rails, each of said rails having similar attachment means extending along the rail.

Advantageously, the driver's cab may have a first pair of rails, extending essentially in parallel to each other, and being mounted to the cab outer wall, and at least one transverse rail, being attached to the first pair of rails via the attachment means and extending transversely between said first pair of rails.

Thus, the rails may be used not only to attach accessories, but also to attach another rail, if necessary by means of an intermediary fastening device. Transverse rails may be attached at any position between two parallel rails, and may be re-positioned along the parallel rails as desired. This arrangement is particularly useful for attaching accessories on the roof of the cab, where it is sometimes desirable to have accessories arranged one after the other on transverse rows.

In another aspect of the invention, there is provided the use of a system as above for mounting at least one accessory to a driver's cab of a commercial vehicle.

Embodiments and alternatives with corresponding advantages as presented above in relation to the driver's cab according to the invention are similarly applicable to the other aspects of the invention.

### Brief description of the accompanying drawings

Other features and advantages of the present invention will appear more clearly from the following description of exemplary embodiments, wherein
Fig. 1 illustrates an embodiment of a driver's cab of a commercial vehicle comprising a rail system.
Fig. 2 illustrates an embodiment of a rail.
Fig. 3 illustrates the cross-section of the rail of Fig. 2.
Fig. 4 illustrates an example of fastening of accessories to the rail of Fig. 2.
Fig. 5 illustrates another example of fastening of accessories to the rail of Fig. 2.
Fig. 6 illustrates an assembly of several rails of the type shown in Fig. 2.
Fig. 7 illustrates an embodiment of a cab where the rails are mounted flush with the exterior wall of the cab.
Fig. 8 illustrates an embodiment of a rail where the attachment means comprises a row of individual attachment formations.

### Detailed description of preferred embodiments of the invention

Features and advantages of the invention will now be described in relation with an exemplary embodiment.

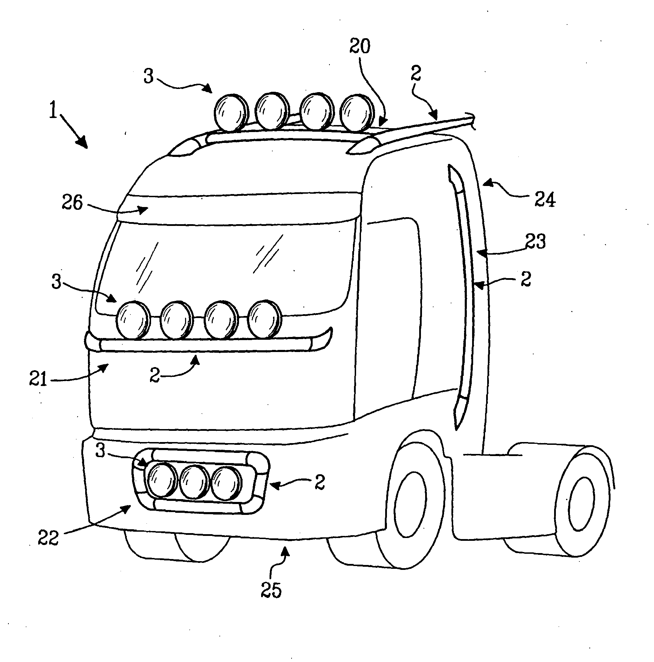

Fig. 1 illustrates schematically an embodiment of a driver's cab 1 of a commercial vehicle comprising a number of rails 2 being mounted to the exterior of the cab 1. The rails 2 are provided with attachment means extending along the rail enabling releasable attachment of accessories 3, illustrated as lamps in the example of Fig. 1.

In Fig. 1, similar rails 2 are attached to different areas of the exterior of the cab 1, namely to the lower front area, the centre front area, the roof and the side wall. Since the rails 2 enable releasable attachment of the accessories 3, as will be described in the following, the accessories 3 may easily be moved from one area of the cab to another, or be removed or replaced.

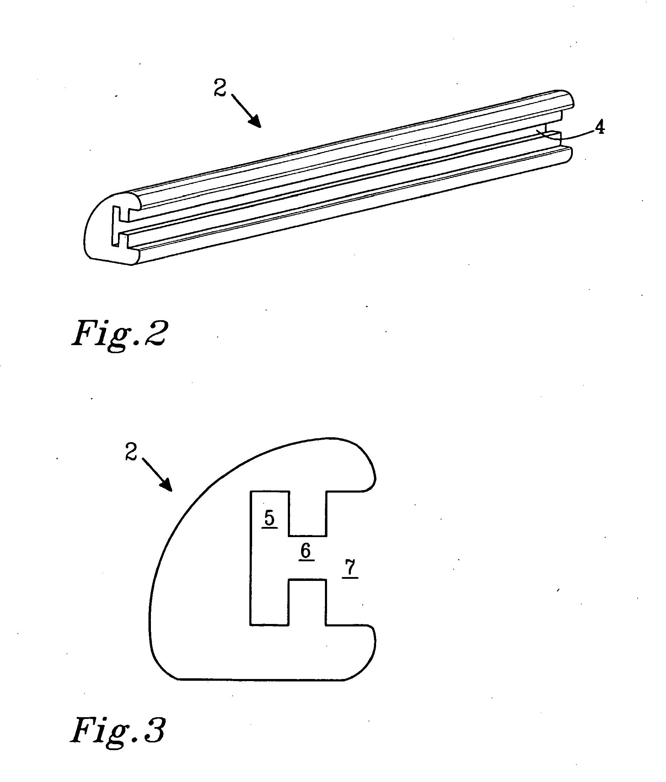

Fig. 2 illustrates an embodiment of a rail 2 being suitable for the present purpose. The rail 2 is provided with attachment means 4 extending along the rail 2.

In the illustrated embodiment, the attachment means 4 extends along substantially the entire length of the rail 2. However, it is possible to provide rails 2 where the attachment means 4 extends along only a part of the rail length. Nevertheless, it is naturally preferred that the attachment means extends along a substantial part of the rail so as to enable attachment along the majority of its length, and preferably along substantially the full length thereof. Thus the attachment means may advantageously extend along more than 50% of the length of the rail, preferably more than 75%, and most preferred more than 90%.

The attachment means 4 of Fig. 2 provides for releasable attachment of accessories by mechanical interlocking, where the attachment means form a female connection to fit with a male connection of a designated accessory.

As seen in Fig. 2, the attachment means 4 is formed from a groove extending along the rail. The groove thus provides a continuous attachment means, allowing for stepless positioning of accessories.

Fig. 3 illustrates the cross-section of the embodiment of a rail 2 illustrated in Fig. 2. The groove 4 defines an inner portion 5 and an outer portion 6, being narrower than the inner portion in a direction perpendicular to the length of the rail. The inner portion is adapted to receive a counteracting element for fastening of an accessory, and the outer portion 6 is narrower than the inner portion 5 so as to form a stop for extraction of such a counteracting element received in the inner portion in a direction transverse to the length of the rail.

Further, the groove 4 defines in this case an outermost portion 7 being wider than the outer portion 6. This purpose of the outermost portion 7 of the groove is to form a guide portion for receiving guide means of a designated accessory or a fastening device for such an accessory.

As seen in Fig. 3, the inner portion 5 and the outer portion 6 of the groove forms the shape of a T where the base of the T is directed towards the opening of the groove. The outermost portion 7 forms the shape of a C with its opening defining the outermost opening of the groove. Thus the groove 4 has a relatively wide inner portion 5, a relatively narrow outer portion 6, and widens again to an outermost portion 7, in this case being just as wide as the inner portion 5.

In the illustrated embodiment, the end of the rail 2 opposing the groove 4 has a rounded shape, which is advantageous from an esthetical and practical point of view. However, numerous other shapes may naturally be envisaged.

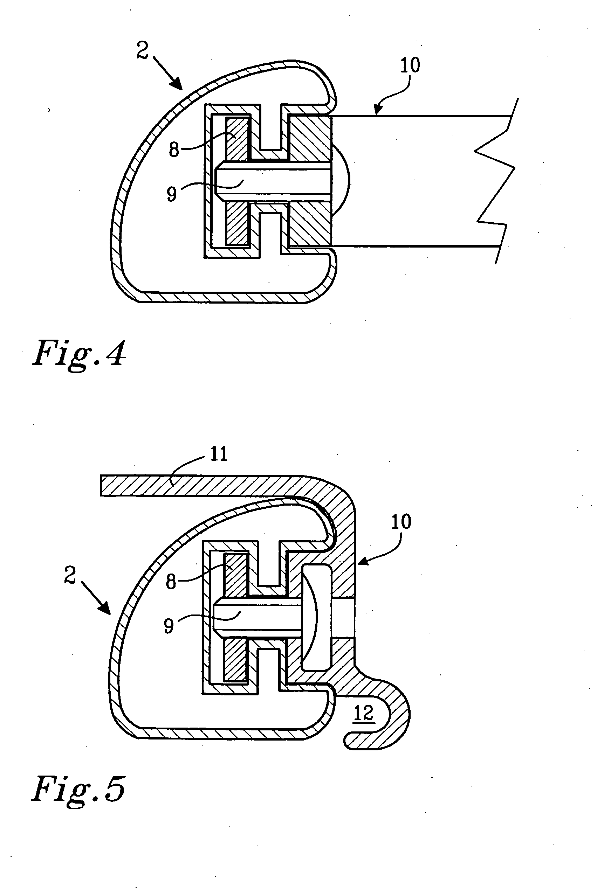

Figs 4 and 5 are illustrative examples showing how fastening of accessories to a rail as described in Figs 2 and 3 may be accomplished.

Fig. 4 shows schematically how fastening is performed using the T-shaped inner portion 5 and 6 of the groove 4.

A counter-acting element 8 is received in the inner portion 5 of the groove 4, and is engageable by a fastening element 9, such as a bolt, to fasten an accessory, either directly or via a fastening console 10.

The counteracting element 8 could be inserted before mounting of the rail 2, via one of the open short ends thereof. Alternatively, openings or lids could be provided at one or more specific locations along the groove 4, where the narrower outer portion 6 is widened so as to enable introduction of a counter-acting element 8 into the groove.

Counteracting elements could be introduced in a number corresponding to the needs for fastening a previewed number of accessories. Thus, the function, form and size of each counteracting element may be selected to match the specific accessory.

However, it could be advantageous to introduce an optional number of counteracting elements 8 into the groove 4 e.g. before mounting the rail 2, so as to provide a number of fastening possibilities, where the user might choose to make use of all or only some thereof. Also, one counteracting element could include a number of fastening positions, i.e. the counteracting element could form a strip in which a number of holes are provided for receiving fastening elements 9.

In another embodiment, the counteracting element 8 may have an elongate shape, so as have a width being less than the width of the narrower portion 6 of the groove 4, and a length exceeding the width of the narrower portion 6 of the groove 4. Such a counter-acting element may be directed along the groove 4 for introduction to the inner portion 5 into via the narrower portion 6 of the groove 4. Once in place in the inner portion 5, the elongate counteracting element may be pivoted, preferably 90 degrees, such that its longest extension forms a stop for withdrawal of the counteracting element via the groove 6.

In yet another embodiment, the groove may be provided with friction means for enhancing the friction between a counteracting element received in the groove and the walls of the groove so as to retain the counteracting element in position in the groove. Such friction means could for example comprise protrusions or indentations formed along inner walls of the groove.

The counter-acting elements 8 may advantageously have a form corresponding to the inner portion 5 of the groove 4 so as to be slidable therein. Thus, any counter-acting element 8 received in the inner portion 5 of the groove may be slid to an optional position for fastening an accessory.

It is understood that the fastening of an accessory in the above-mentioned manner may be made at an optional position along the attachment means 4. The fastening does not cause any alteration or damage, such as e.g. bore holes, of the rail 2. Instead, the accessories are releasably attached such that they may be attached, removed and reattached at optional positions of the rail. Accordingly, the user has full liberty of choice for designing and re-designing the exterior of the driver's cab.

In Fig. 4, it is seen how a portion of an accessory or fastening device 10 extends into the outermost guide portion 7 of the groove 4. Thus the outermost portion 7 serves to guide the fastening device 10 and to enhance its stability. Further, the head of the fastening means 9, in this case a bolt, may be confined to the space within the outermost portion 7 of the groove 4. Thus, bolt heads or the like protruding from the rail 2 may avoided.

Fig. 5 illustrates an alternative embodiment for fastening of an accessory to a rail 2 as depicted in Fig. 2. In this case, a bracket 11 is attached to the rail 2 in a similar manner as the fastening portion 10 of Fig. 4. The bracket 11 forms a space 12 between the bracket and the outer surface of the rail 2, in this case at a position adjacent to the groove 4. Such a space 12 may be used e.g. for accommodating cables or the like that might be associated to the accessory to be mounted. In addition, the bracket 11 forms a platform 13 with a flat surface extending over the rail 2, enabling fastening of accessories 2 to a position on the platform 13. Naturally numerous forms of brackets 11 may be envisaged for fastening different types of accessories.

Further, brackets may be designed to be clamped about the rail 2, preferably using at laest the outermost portion 7 of the groove 4 to provide additional support for the bracket. In this case, no counteracting elements or fastening elements are needed. However, generally, attachment using counteracting elements and fastening elements may be made more stable and convenient that attachment by clamping. Nevertheless, a rail providing double attachment possibilities: fastening element/counteracting element or clamping, will provide the user with numerous options for fastening of different types of accessories to the rails.

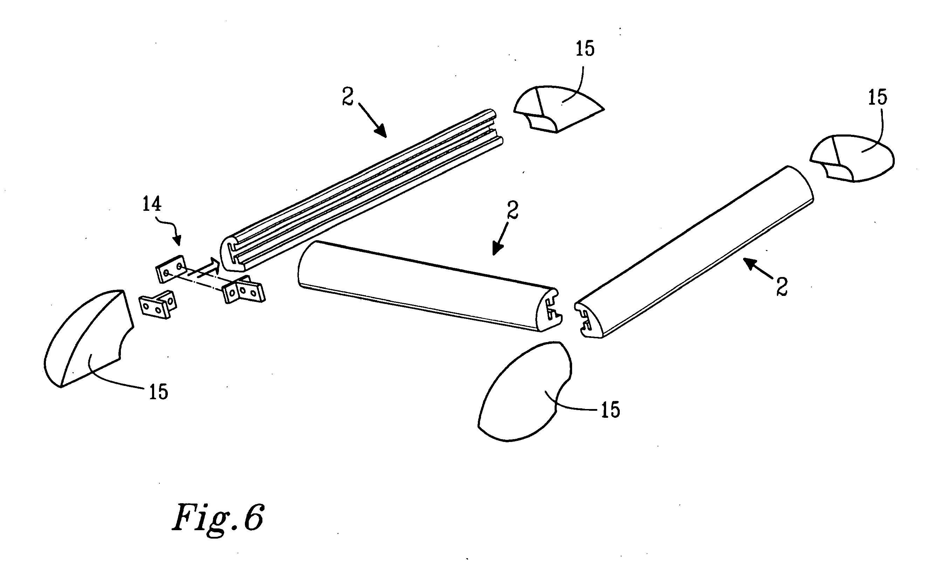

Fig. 6 is an exploded view of an embodiment where a plurality of rails 2 are connected to form a rack for attachment of accessories. A first pair of rails 2 is arranged to extend essentially in parallel to each other, and a transverse rail 2' is mounted to extend between the first pair of rails 2. For attachment of the transverse rail 2' between the parallel rails 2, fastening means 14 comprising a T- shaped fastening element and a counteracting element may be used. The base of a T-shaped fastening element may be fastened in the groove 4 of the transverse rail 2' at one end thereof, and the top of the T-shaped fastening element may be fastened in the groove 4 of one of the parallel rails 2 at an optional position along the length of the parallel rail 2.

Thus, the rails 2 may be used to form a rack where the number of transverse rails 2' may be adjusted, as well as the distance between individual transverse rails 2'. The transverse rails 2' are attachable and removable from the parallel rails 2 at the choice of a user.

In the illustrated embodiment of Fig. 6, only the first pair of rails 2 needs to be mounted to the driver's cab 2. To this end, cab mounting elements 15 are arranged at the ends of the parallel rails 2, in this case using T-shaped fastening elements 14. Thus, the rails 2 may be mounted separate from the exterior wall of the cab, where the cab mounting elements 15 extending from the exterior wall of the cab so as to hold the rails 2 in position at a distance from the cab outer wall. This type of arrangement is similar to the one seen in Fig. 1.

Use of a parallel pair of rails 2 as described above for forming a rack is particularly advantageous at the roof area of a driver's cab. There, it may be used in particular for mounting of wind deflectors which is a rather voluminous type of accessory that may often require several fastening positions. Naturally, also signs, lamps, horns etc may be attached to such a rack.

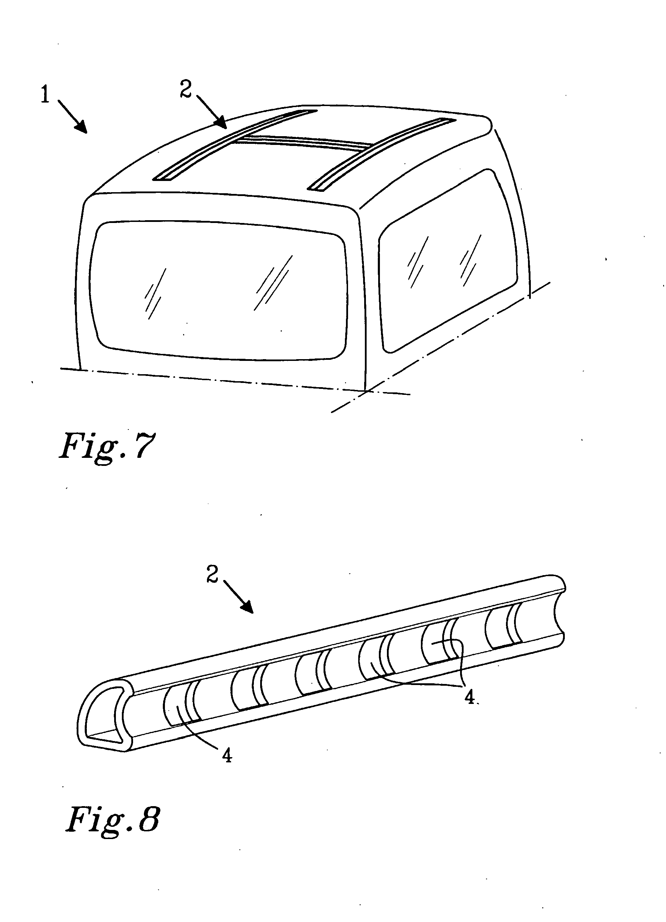

In an alternative embodiment, the rails 2 may be arranged flush with the cab outer wall. Such an arrangement is schematically depicted in Fig. 7. In this embodiment, the rails 2 are integrated with the outer wall of the roof of the cab 1. The fastening means 4 will preferably be directed outwards from the cab wall, and may be designed in numerous different ways, including the preferred embodiments as described above. The rails 2 being arranged flush with the cab outer wall means that essentially no contribution to the wind resistance of the cab is caused by the rails 2. Also, the rails per se will not alter the general outer appearance of the cab, which might be advantageous from an aesthetical point of view.

For maximum benefit of the invention, rails 2 may be provided at several areas of a driver's cab, such as the roof area 20, a centre front area 21, a lower front area 22, a side wall 23, the rear 24 and the bottom 25 as illustrated in Fig. 1. The rails 2 should preferably have essentially identical attachment means 4 extending along the rails 2, so as to enable the accessories or fastening devices to be attached to any area or replaced from any area to another.

Fig. 8 depicts an alternative embodiment of a rail 2 having attachment means 4 extending along the length of the rail, wherein the attachment means 4 is formed by a number of discrete attachment formations 16 being arranged sequentially along the rail. Each attachment formation 16 provides a position for attachment of an accessory to the rail. In this case, the attachment formations 16 form indentations in the rail 2, to which accessories may be attached. The indentations 16 may advantageously have a cross-section similar to those described above, being suitable for receiving a counteracting element. Alternatively, the indentations 16 may be shaped so as to receive a fastening element such as a bolt. This embodiment is however not as flexible for fastening of different types of devices using different attachment means as embodiments where a counteracting element may be selected for each different case. Further, the embodiments using discrete attachment formations do naturally not exhibit the advantage of stepless adjustment of the position of the accessories.

In the above, the invention has been described in relation to exemplary embodiments. Fastening means or brackets for use with the rails may have various shapes and sizes, as long as they correspond to the attachment means of the rail.

## Claims

1. A driver's cab (1) of a commercial vehicle, comprising at least one rail (2) being mounted to the exterior of said cab, said rail (2) forming integral attachment means (4) extending along the rail (2) enabling releasable attachment of designated accessories (3) at an optional position along the attachment means (4), said attachment means (4) comprising a groove extending along the rail, wherein said groove (4), as seen in cross-section, defines an inner portion (5) for receiving a counteracting element (8) for fastening of an accessory (3), and an outer portion (6) being narrower than said inner portion (5), so as to form a stop for extraction of the counteracting element (8) when received in the inner portion (5) in a direction transverse to the length of the rail (2), **characterized in that**
the groove (4) further defining an outermost portion (7) being wider than the outer portion (6), so as to form a guide portion for receiving guide means of a designated accessory.

2. A driver's cab according to claim 1, wherein said attachment means (4) enables releasable attachment of designated accessories (3) by mechanical interlocking.

3. A driver's cab according to claim 2, wherein said attachment means (4) forms a male/female connection to fit with a female/male connection, respectively of the designated accessory (3).

4. A driver's cab according to any one of the preceding claims, wherein said groove (4) has a cross-section of which at least a part (5, 6) forms a T.

5. A driver's cab according to any one of the preceding claims, wherein said groove (4) has a cross-section of which at least a part (7) forms a C.

6. A driver's cab according to any one of the previous claims, wherein the rail (2) is mounted flush with the exterior wall of the cab (1).

7. A driver's cab according to any one of the claims 1 to 6, wherein the rail (2) is provided with cab mounting means (15) for affixing the rail (2) to the cab (1).

8. A driver's cab according to any one of the previous claims, the cab comprising a plurality of rails (2), each of said rails (2) having essentially identical attachment means (4) extending along the rail.

9. A driver's cab according to any one of the previous claims, having a first pair of rails (2), extending essentially in parallel to each other, and being mounted to the cab outer wall, and at least one transverse rail (2') extending transversely between said first pair of rails (2) and being attached via the attachment means (4) of the first pair of rails (2).

10. A driver's cab according to any one of the previous claims, wherein at least one rail (2) is mounted to at least two out of the cab roof area (20), the cab lower front area (22), the cab centre front area (21), the cab top front area (26), the cab side area (23), the cab rear area (24), and the cab bottom area (25).

11. A driver's cab according to any one of the previous claims, wherein the rail (2) comprises openings or lids being provided at at least one location along the groove (4), where the narrow outer portion (6) is widened so as to enable introduction of a counter-acting element (8) into the groove.

12. A driver's cab according to any one of the previous claims, further comprising at least one counteracting element (8) being received in the inner portion (5) of said groove.

13. A driver's cab according to claim 12, wherein the counteracting element (8) have a form corresponding to the inner portion (5) of the groove (4) so as to be slidable therein.

14. A driver's cab according to any one of the claims 12 or 13, wherein the counteracting element (8) is in the form of a strip in which a number of holes are provided for fastening of at least one an accessory (3).

15. A driver's cab according to any one of the claims 12 or 13, wherein the counteracting element (8) has an elongate shape, the width of the counteracting element (8) being less than the narrower portion (6) of the groove (4), and the length of the counteracting element (8) exceeding the width of the narrower portion (6) of the groove (4), such that the counteracting element may be directed along the groove (4) for introduction to the inner portion (5) via the narrower portion (6) of the groove (4), and thereafter be pivoted, such that the longest extension of the counteracting element forms a stop for withdrawal of the counteracting element (5) via the groove (6).

16. A driver's cab according to any one of the claims 11 to 15, comprising a designated accessory (3) being releasably attached to the rail (2) by means of fastening to the counteracting element (8) received in the inner part (5) of said groove (4).

17. A driver's cab according to claim 16, wherein said designated accessory (3) is having guide means being received in the outermost portion (7) of said groove (4).

18. A commercial vehicle cab accessory mounting system comprising at least one rail (2), said rail having attachment means (4) extending along the rail enabling releasable attachment of designated accessories (3) at an optional position along the attachment means (4), for mounting said designated accessories (3) to a driver's cab of a commercial vehicle, the attachment means (4) comprising a groove extending along the rail (2), wherein said groove (4), as seen in cross-section, defines an inner portion (5) for receiving a counteracting element (8) for fastening of an accessory (3), and an outer portion (6) being narrower than said inner portion (5), so as to form a stop for extraction of the counteracting element (8) when received in the inner portion (5) in a direction transverse to the length of the rail (2), **characterized in that**
the groove (4) further defines an outermost portion (7) being wider than the outer portion (6), so as to form a guide portion for receiving guide means of a designated accessory (3).

19. A commercial vehicle cab accessory mounting system according to claim 18, wherein said attachment means (4) enables releasable attachment of designated accessories by mechanical interlocking.

20. A commercial vehicle cab accessory mounting system according to claim 19, wherein said attachment means (4) forms a male/female connection to fit with a female/male connection, respectively of the designated accessory.

21. A commercial vehicle cab accessory mounting system according to any one of the claims 18 to 20, wherein said groove (4) has a cross-section of which at least a part (5, 6) forms a T.

22. A commercial vehicle cab accessory mounting system according to any one of the claims 18 to 21, wherein said groove (4) has a cross-section of which at least a part (5, 6) forms a C.

23. A commercial vehicle cab accessory mounting system according to any one of the claims 18 to 22, wherein the rail is provided with cab mounting elements (15).

24. A commercial vehicle cab accessory mounting system according to any one of the claims 18 to 23, wherein the rail (2) comprises openings or lids being provided at at least one location along the groove (4), where the narrow outer portion (6) is widened so as to enable introduction of a counter-acting element (8) into the groove.

25. A commercial vehicle cab accessory mounting system according to any one of the claims 18 to 24, further comprising at least one counteracting element (8) being received in the inner portion (5) of said groove.

26. A commercial vehicle cab accessory mounting system according to claim 25, wherein the counteracting element (8) have a form corresponding to the inner portion (5) of the groove (4) so as to be slidable therein.

27. A commercial vehicle cab accessory mounting system according to any one of the claims 25 and 26, wherein the counteracting element (8) is in the form of a strip in which a number of holes are provided for fastening of at least one an accessory (3).

28. A commercial vehicle cab accessory mounting system according to any one of the claims 25 or 26, wherein the counteracting element (8) have an elongate shape, the width of the counteracting element (8) being less than the narrower portion (6) of the groove 4, and the length of the counteracting element (8) exceeding the width of the narrower portion (6) of the groove (4), such that the counteracting element may be directed along the groove (4) for introduction to the inner portion (5) via the narrower portion (6) of the groove (4), and thereafter be pivoted, such that the longest extension of the counteracting element forms a stop for withdrawal of the counteracting element (5) via the groove (6).

29. Use of a system according to any one of the claims 18 - 28 for mounting of at least one accessory to a commercial vehicle cab.

## Patentansprüche

1. Fahrerkabine (1) eines Nutzfahrzeugs mit wenigstens einer Schiene (2), die an der Außenseite der Kabine angebracht ist, wobei die Schiene (2) eine integrale Befestigungseinrichtung (4) bildet, die sich entlang der Schiene (2) erstreckt und eine lösbare Befestigung bestimmten Zubehörs (3) an einer optionalen Position entlang der Befestigungseinrichtung (4) ermöglicht, wobei die Befestigungseinrichtung (4) eine sich entlang der Schiene erstreckende Nut umfasst, wobei die Nut (4), im Querschnitt gesehen, einen Innenabschnitt (5) für eine Aufnahme eines gegenwirkenden Elements (8) zur Befestigung eines Zubehörs (3), und einen Außenabschnitt (6) bildet, der schmaler ist als der Innenabschnitt (5), um in einer Richtung quer zur Längsrichtung der Schiene (2) einen Anschlag für ein Herausziehen des gegenwirkenden Elements (8) zu bilden, wenn es in dem Innenabschnitt (5) aufgenommen ist, **dadurch gekennzeichnet, dass**
die Nut (4) außerdem einen äußersten Abschnitt (7) bildet, der breiter ist als der Außenabschnitt (6), um einen Führungsabschnitt zur Aufnahme einer Führungseinrichtung eines bestimmten Zubehörs zu bilden.

2. Fahrerkabine nach Anspruch 1, bei der die Befestigungseinrichtung (4) eine lösbare Befestigung bestimmten Zubehörs (3) durch mechanische Verriegelung ermöglicht.

3. Fahrerkabine nach Anspruch 2, bei der die Befestigungseinrichtung (4) eine Männlich/Weiblich-Verbindung für eine Passung mit einer jeweiligen Weiblich/Männlich-Verbindung des bestimmten Zubehörs (3) bildet.

4. Fahrerkabine nach einem der vorhergehenden Ansprüche, bei der die Nut (4) einen Querschnitt aufweist, von dem wenigstens ein Teil (5, 6) ein T bildet.

5. Fahrerkabine nach einem der vorhergehenden Ansprüche, bei der die Nut (4) einen Querschnitt aufweist, von dem wenigstens ein Teil (5, 6) ein C bildet.

6. Fahrerkabine nach einem der vorhergehenden Ansprüche, bei der die Schiene (2) bündig mit der Außenwand der Kabine (1) angebracht ist.

7. Fahrerkabine nach einem der Ansprüche 1 bis 6, bei der die Schiene (2) mit einer Kabinenbefestigungseinrichtung (15) für eine Befestigung der Schiene (2) an der Kabine (1) versehen ist.

8. Fahrerkabine nach einem der vorhergehenden Ansprüche, wobei die Kabine eine Vielzahl von Schienen (2) umfasst, wobei jede Schiene (2) im Wesentlichen identische Befestigungseinrichtungen (4) aufweist, die sich entlang der Schiene erstrecken.

9. Fahrerkabine nach einem der vorhergehenden Ansprüche mit einem ersten Paar von Schienen (2), die sich im Wesentlichen parallel zueinander erstrecken und an der Kabinenaußenwand angebracht sind und wenigstens einer Querschiene (2'), die sich quer zwischen dem ersten Paar von Schienen (2) erstreckt und über die Befestigungseinrichtungen (4) des ersten Paars von Schienen (2) angebracht ist.

10. Fahrerkabine nach einem der vorhergehenden Ansprüche, bei der wenigstens eine Schiene (2) an wenigstens zwei von dem Kabinendachbereich (20), dem unteren Frontbereich (22) der Kabine, dem mittleren Frontbereich (21) der Kabine, dem oberen Frontbereich (26) der Kabine, dem Seitenbereich (23) der Kabine, dem hinteren Bereich (24) der Kabine und dem Bodenbereich (25) der Kabine angebracht ist.

11. Fahrerkabine nach einem der vorhergehenden Ansprüche, bei der die Schiene (2) Öffnungen oder Deckel umfasst, die an wenigstens einem Ort entlang der Nut (4) vorgesehen sind, an dem der schmale Außenabschnitt (6) erweitert ist, um eine Einführung eines gegenwirkenden Elements (8) in die Nut zu ermöglichen.

12. Fahrerkabine nach einem der vorhergehenden Ansprüche, die außerdem wenigstens ein gegenwirkendes Element (8) umfasst, das in dem Innenabschnitt (5) der Nut aufgenommen ist.

13. Fahrerkabine nach Anspruch 12, bei der das gegenwirkende Element (8) eine Form aufweist, die dem Innenabschnitt (5) der Nut (4) entspricht, um darin verschiebbar zu sein.

14. Fahrerkabine nach einem der Ansprüche 12 oder 13, bei der das gegenwirkende Element (8) die Form eines Streifens aufweist, in dem eine Anzahl von Löchern zur Befestigung wenigstens eines Zubehörs (3) vorgesehen ist.

15. Fahrerkabine nach einem der Ansprüche 12 oder 13, bei der das gegenwirkende Element (8) eine längliche Form aufweist, wobei die Breite des gegenwirkenden Elements (8) geringer ist als der schmalere Abschnitt (6) der Nut (4), und die Länge des gegenwirkenden Elements (8) die Breite des schmaleren Abschnitts (6) der Nut (4) übersteigt, so dass das gegenwirkende Element entlang der Nut (4) für eine Einführung zu dem Innenabschnitt (5) über den schmaleren Abschnitt (6) der Nut (4) gerichtet und danach verschwenkt werden kann, so dass die längste Erstreckung des gegenwirkenden Elements einen Anschlag für ein Herausziehen des gegenwirkenden Elements (5) über die Nut (6) bildet.

16. Fahrerkabine nach einem der Ansprüche 11 bis 15 mit einem bestimmten Zubehör (3), das lösbar an der Schiene (2) durch Befestigung des gegenwirkenden Elements (8) angebracht ist, das in den Innenabschnitt (5) der Nut (4) aufgenommen ist.

17. Fahrerkabine nach Anspruch 16, bei der das bestimmte Zubehör (3) eine Führungseinrichtung aufweist, die in dem äußersten Abschnitt (7) der Nut (4) aufgenommen ist.

18. Nutzfahrzeugkabinen-Zubehörbefestigungssystem mit wenigstens einer Schiene (2), wobei die Schiene (2) eine Befestigungseinrichtung (4) aufweist, die sich entlang der Schiene erstreckt und eine lösbare Befestigung eines bestimmten Zubehörs (3) an einer optionalen Position entlang der Befestigungseinrichtung (4) ermöglicht, um bestimmtes Zubehör (3) an einer Fahrerkabine eines Nutzfahrzeugs zu befestigen, wobei die Befestigungseinrichtung (4) eine sich entlang der Schiene (2) erstreckende Nut umfasst, wobei die Nut (4), im Querschnitt gesehen, einen Innenabschnitt (5) für eine Aufnahme eines gegenwirkenden Elements (8) zur Befestigung eines Zubehörs (3), und einen Außenabschnitt (6) umfasst, der schmaler ist als der Innenabschnitt (5), um in einer Richtung quer zur Längsrichtung der Schiene (2) einen Anschlag für ein Herausziehen des gegenwirkenden Elements (8) zu bilden, wenn es in dem Innenabschnitt (5) aufgenommen ist, **dadurch gekennzeichnet, dass**
die Nut (4) außerdem einen äußersten Abschnitt (7) bildet, der breiter ist als der Außenabschnitt (6), um einen Führungsabschnitt zur Aufnahme von Führungseinrichtungen des bestimmten Zubehörs (3) zu bilden.

19. Nutzfahrzeugkabinen-Zubehörbefestigungssystem nach Anspruch 18, wobei die Befestigungseinrichtung (4) eine lösbare Befestigung des bestimmten Zubehörs durch mechanische Verriegelung umfasst.

20. Nutzfahrzeugkabinen-Zubehörbefestigungssystem nach Anspruch 19, bei dem die Befestigungseinrichtung (4) eine Männlich/Weiblich-Verbindung für eine Passung mit einer jeweiligen Weiblich/Männlich-Verbindung des bestimmten Zubehörs bildet.

21. Nutzfahrzeugkabinen-Zubehörbefestigungssystem nach einem der Ansprüche 18 bis 20, bei dem die Nut (4) einen Querschnitt aufweist, von dem wenigstens ein Teil (5, 6) ein T bildet.

22. Nutzfahrzeugkabinen-Zubehörbefestigungssystem nach einem der Ansprüche 18 bis 21, bei dem die Nut (4) einen Querschnitt aufweist, von dem wenigstens ein Teil (5, 6) ein C bildet.

23. Nutzfahrzeugkabinen-Zubehörbefestigungssystem nach einem der Ansprüche 18 bis 22, bei dem die Schiene mit Kabinenbefestigungselementen (15) versehen ist.

24. Nutzfahrzeugkabinen-Zubehörbefestigungssystem nach einem der Ansprüche 18 bis 23, bei dem die Schiene (2) Öffnungen oder Deckel umfasst, die an wenigstens einem Ort entlang der Nut (4) vorgesehen sind, an dem der schmale äußere Abschnitt (6) erweitert ist, um eine Einführung eines gegenwirkenden Elements (8) in die Nut zu ermöglichen.

25. Nutzfahrzeugkabinen-Zubehörbefestigungssystem nach einem der Ansprüche 18 bis 24, das außerdem wenigstens ein gegenwirkendes Element (8) umfasst, das in dem Innenabschnitt (5) der Nut aufgenommen ist.

26. Nutzfahrzeugkabinen-Zubehörbefestigungssystem nach Anspruch 25, bei dem das gegenwirkende Element (8) eine Form aufweist, die dem Innenabschnitt (5) der Nut (4) entspricht, um darin verschiebbar zu sein.

27. Nutzfahrzeugkabinen-Zubehörbefestigungssystem nach einem der Ansprüche 25 und 26, bei dem das gegenwirkende Element (8) die Form eines Streifens aufweist, in dem eine Anzahl von Löchern zur Befestigung wenigstens eines Zubehörs (3) vorgesehen ist.

28. Nutzfahrzeugkabinen-Zubehörbefestigungssystem nach einem der Ansprüche 25 oder 26, bei dem das gegenwirkende Element (8) eine längliche Form aufweist, wobei die Breite des gegenwirkenden Elements (8) geringer ist als der schmalere Abschnitt (6) der Nut (4), und die Länge des gegenwirkenden Elements (8) die Breite des schmaleren Abschnitts (6) der Nut (4) übersteigt, so dass das gegenwirkende Element entlang der Nut (4) für eine Einführung zu dem inneren Abschnitts (5) über den schmaleren Abschnitt (6) der Nut (4) gerichtet und danach verschwenkt werden kann, so dass die längste Erstreckung des gegenwirkenden Elements einen Anschlag für ein Herausziehen des gegenwirkenden Elements (5) über die Nut (6) bildet.

29. Verwendung eines Systems nach einem der Ansprüche 18 bis 28 zur Anbringung wenigstens eines Zubehörs an einer Kabine eines Nutzfahrzeugs.

## Revendications

1. Cabine de conducteur (1) d'un véhicule commercial, comportant au moins un rail (2) monté sur l'extérieur de ladite cabine, ledit rail (2) formant des moyens de fixation en un seul bloc (4) s'étendant le long du rail (2) permettant une fixation libérable d'accessoires désignés (3) dans une position facultative le long des moyens de fixation (4), lesdits moyens de fixation (4) comportant une rainure s'étendant le long du rail, dans laquelle ladite rainure (4), vue en coupe transversale, définit une partie intérieure (5) destinée à recevoir un élément antagoniste (8) pour la fixation d'un accessoire (3), et une partie extérieure (6) étant plus étroite que ladite partie intérieure (5), afin de constituer un arrêt pour une extraction de l'élément antagoniste (8) lorsque celui-ci est reçu dans la partie intérieure (5) dans une direction transversale à la longueur du rail (2), **caractérisée en ce que**
la rainure (4) définit en outre la partie la plus externe (7) étant plus large que la partie extérieure (6), afin de former une partie de guidage destinée à recevoir des moyens de guidage d'un accessoire désigné.

2. Cabine de conducteur selon la revendication 1, dans laquelle lesdits moyens de fixation (4) permettent une fixation libérable d'accessoires désignés (3) par verrouillage mutuel mécanique.

3. Cabine de conducteur selon la revendication 2, dans laquelle lesdits moyens de fixation forment un raccordement mâle/femelle devant s'adapter à un raccordement femelle/mâle, respectivement, de l'accessoire désigné (3).

4. Cabine de conducteur selon l'une quelconque des revendications précédentes, dans laquelle ladite rainure (4) a une coupe transversale dont au moins une partie (5, 6) forme un T.

5. Cabine de conducteur selon l'une quelconque des revendications précédentes, dans laquelle ladite rainure (4) a une coupe transversale dont au moins une partie (7) forme un C.

6. Cabine de conducteur selon l'une quelconque des revendications précédentes, dans laquelle le rail (2) est monté affleurant par rapport à la paroi extérieure de la cabine (1).

7. Cabine de conducteur selon l'une quelconque des revendications 1 à 6, dans laquelle le rail (2) est muni de moyens de montage sur cabine (15) afin de fixer le rail (2) sur la cabine (1).

8. Cabine de conducteur selon l'une quelconque des revendications précédentes, la cabine comportant une pluralité de rails (2), chacun desdits rails (2) ayant des moyens de fixation sensiblement identiques (4) s'étendant le long du rail.

9. Cabine de conducteur selon l'une quelconque des revendications précédentes, ayant une première paire de rails (2), s'étendant sensiblement parallèlement l'un à l'autre, et étant montés sur la paroi extérieure de la cabine, et au moins un rail transversal (2') s'étendant transversalement entre ladite première paire de rails (2), et étant fixé via les moyens de fixation (4) de la première paire de rails (2).

10. Cabine de conducteur selon l'une quelconque des revendications précédentes, dans laquelle au moins un rail (2) est monté sur au moins deux parmi les zones suivantes : la zone de toit (20) de la cabine, la zone avant inférieure (22) de la cabine, la zone centrale avant (21) de la cabine, la zone avant supérieure (26) de la cabine, la zone latérale (23) de la cabine, la zone arrière (24) de la cabine, et la zone inférieure (25) de la cabine.

11. Cabine de conducteur selon l'une quelconque des revendications précédentes, dans laquelle le rail (2) comporte des ouvertures, ou des couvercles étant fournis au niveau d'au moins un emplacement le long de la rainure (4), où la partie extérieure étroite (6) est élargie afin de permettre l'introduction d'un élément antagoniste (8) dans la rainure.

12. Cabine de conducteur selon l'une quelconque des revendications précédentes, comportant en outre au moins un élément antagoniste (8) étant reçu dans la partie intérieure (5) de ladite rainure.

13. Cabine de conducteur selon la revendication 12, dans laquelle l'élément antagoniste (8) a une forme correspondant à la partie intérieure (5) de la rainure (4) afin de pouvoir coulisser dans celle-ci.

14. Cabine de conducteur selon la revendication 12 ou 13, dans laquelle l'élément antagoniste (8) se présente sous la forme d'une bande dans laquelle plusieurs trous sont prévus pour fixer au moins un accessoire (3).

15. Cabine de conducteur selon la revendication 12 ou 13, dans laquelle l'élément antagoniste (8) présente une forme allongée, la largeur de l'élément antagoniste (8) étant inférieure à la partie plus étroite (6) de la rainure (4), et la longueur de l'élément antagoniste (8) dépassant la largeur de la partie la plus étroite (6) de la rainure (4), de sorte que l'élément antagoniste peut être dirigé le long de la rainure (4) pour être introduit dans la partie intérieure (5) via la partie plus étroite (6) de la rainure (4), et peut ensuite être pivoté, de telle sorte que l'extension la plus longue de l'élément antagoniste forme une butée contre un retrait de l'élément antagoniste (5) via la rainure (6).

16. Cabine de conducteur selon l'une quelconque des revendications 11 à 15, comportant un accessoire désigné (3) étant fixé de manière amovible sur le rail (2) par l'intermédiaire d'une fixation sur l'élément antagoniste (8) reçu dans la partie intérieure (5) de ladite rainure (4).

17. Cabine de conducteur selon la revendication 16, dans laquelle ledit accessoire désigné (3) dispose de moyens de guidage reçus dans la partie la plus externe (7) de ladite rainure (4).

18. Système de montage d'accessoire de cabine de véhicule commercial comportant au moins un rail (2), ledit rail possédant des moyens de fixation (4) s'étendant le long du rail, permettant une fixation libérable d'accessoires désignés (3) dans une position facultative le long des moyens de fixation (4), afin de monter lesdits accessoires désignés (3) sur une cabine de conducteur d'un véhicule commercial, les moyens de fixation (4) comportant une rainure s'étendant le long du rail (2), dans lequel ladite rainure (4), vue en coupe transversale, définit une partie intérieure (5) destinée à recevoir un élément antagoniste (8) pour la fixation d'un accessoire (3), et une partie extérieure (6) étant plus étroite que ladite partie intérieure (5), afin de former un arrêt à une extraction de l'élément antagoniste (8) lorsque celui-ci est reçu dans la partie intérieure (5) dans une direction transversale à la longueur du rail (2), **caractérisé en ce que**
la rainure (7) définit en outre la partie la plus externe (7) plus large que la partie extérieure (6), afin de former une partie de guidage pour recevoir des moyens de guidage d'un accessoire désigné (3).

19. Système de montage d'accessoire de cabine de véhicule commercial selon la revendication 18, dans lequel lesdits moyens de fixation (4) permettent une fixation libérable d'accessoires désignés, par verrouillage mutuel mécanique.

20. Système de montage d'accessoire de cabine de véhicule commercial selon la revendication 19, dans lequel lesdits moyens de fixation (4) forment un raccordement mâle/femelle devant s'adapter à un raccordement femelle/mâle, respectivement, de l'accessoire désigné.

21. Système de montage d'accessoire de cabine de véhicule commercial selon l'une quelconque des revendications 18 à 20, dans lequel ladite rainure (4) a une coupe transversale dont au moins une partie (5, 6) forme un T.

22. Système de montage d'accessoire de cabine de véhicule commercial selon l'une quelconque des revendications 18 à 21, dans lequel ladite rainure (4) a une coupe transversale dont au moins une partie (5, 6) forme un C.

23. Système de montage d'accessoire de cabine de véhicule commercial selon l'une quelconque des revendications 18 à 22, dans lequel le rail est muni d'éléments de montage sur cabine (15).

24. Système de montage d'accessoire de cabine de véhicule commercial selon l'une quelconque des revendications 18 à 23, dans lequel le rail (2) comporte des ouvertures, ou des couvercles étant agencés au niveau d'au moins un emplacement le long de la rainure (4), où la partie extérieure étroite (6) est élargie afin de permettre une introduction d'un élément antagoniste (8) dans la rainure.

25. Système de montage d'accessoire de cabine de véhicule commercial selon l'une quelconque des revendications 18 à 24, comportant en outre au moins un élément antagoniste (8) reçu dans la partie intérieure (5) de ladite rainure.

26. Système de montage d'accessoire de cabine de véhicule commercial selon la revendication 25, dans lequel l'élément antagoniste (8) a une forme correspondant à la partie intérieure (5) de la rainure (4) afin de pouvoir coulisser dans celle-ci.

27. Système de montage d'accessoire de cabine de véhicule commercial selon l'une quelconque des revendications 25 et 26, dans lequel l'élément antagoniste (8) se présente sous la forme d'une bande dans laquelle plusieurs trous sont prévus pour fixer au moins un accessoire (3).

28. Système de montage d'accessoire de cabine de véhicule commercial selon la revendication 25 ou 26, dans lequel l'élément antagoniste (8) a une forme allongée, la largeur de l'élément antagoniste (8) étant inférieure à la partie plus étroite (6) de la rainure (4), et la longueur de l'élément antagoniste (8) dépassant la largeur de la partie plus étroite (6) de la rainure (4), de telle sorte que l'élément antagoniste peut être dirigé le long de la rainure (4) afin d'être introduit dans la partie intérieure (5) via la partie plus étroite (6) de la rainure (4), et peut ensuite être pivoté, de telle sorte que l'extension la plus longue de l'élément antagoniste forme un arrêt au retrait de l'élément antagoniste (5) via la rainure (6).

29. Utilisation d'un système selon l'une quelconque des revendications 18 à 28 pour le montage d'au moins un accessoire sur une cabine de véhicule commercial.
